# EUROPEAN PATENT SPECIFICATION

(11) **EP 1 738 890 B1**
(45) Date of publication and mention of the grant of the patent: **20.01.2010**
(21) Application number: 06016162.7
(22) Date of filing: 15.05.2000
(51) Int. Cl.: B29C 45/16

(54) **Mould with turnable middle section**
Werkzeug mit drehbarem Mittelteil
Moule doté d'une partie médiane rotative

(30) Priority: 17.05.1999 DK 67099
(43) Date of publication of application: 03.01.2007
(62) Divisional of application: 00926724.6
(73) Proprietor: Gram, Jes, Tougaard, 3460 Birkerod (DK)
(72) Inventor: Gram, Jes, Tougaard, 3460 Birkerod (DK)
(74) Representative: Jensen, Peter Kim

(56) References cited:
- WO-A-98/35808
- WO-A-98/38021
- DE-B- 1 215 353
- JP-A- 1 114 405
- JP-A- 2 143 819
- JP-A- 5 595 544
- JP-A- 5 952 626
- JP-A- 8 108 449
- JP-A- 63 135 214

## Description

The invention concerns a procedure for the production of parts, preferably of plastics, both one-component as well as multi-component, as stated in the preamble of claim 1. Such a procedure is known from the applicant's international patent application No. WO 98/35808.

Further reference is made to JP 63135214 and JP 55-95544.

Until now, described procedures and machinery for the production of parts like this have various disadvantages or flaws. The procedure and machinery according to the invention have attempted to correct this, hereby also achieving a number of advantages and simplifications of the hitherto known moulding processes, considerably decreasing the cycle time and consequently the price of the finished parts.

The invention is characterized by the features stated in the characterizing part of claim 1.

The turnable middle section of the tool preferably has a cross section with the outline of a square. This square can suitably have the corners cut off so a smaller opening of the mould will be sufficient to turn the middle section around. For the same reason, the middle section can suitably be parted into two or more turnable mould parts. Besides the square or an adapted square the cross-section of the turnable middle section can have the outline of a regular hexagon, an octagon or another regular polygon, where the two opposite placed sides are parallel.

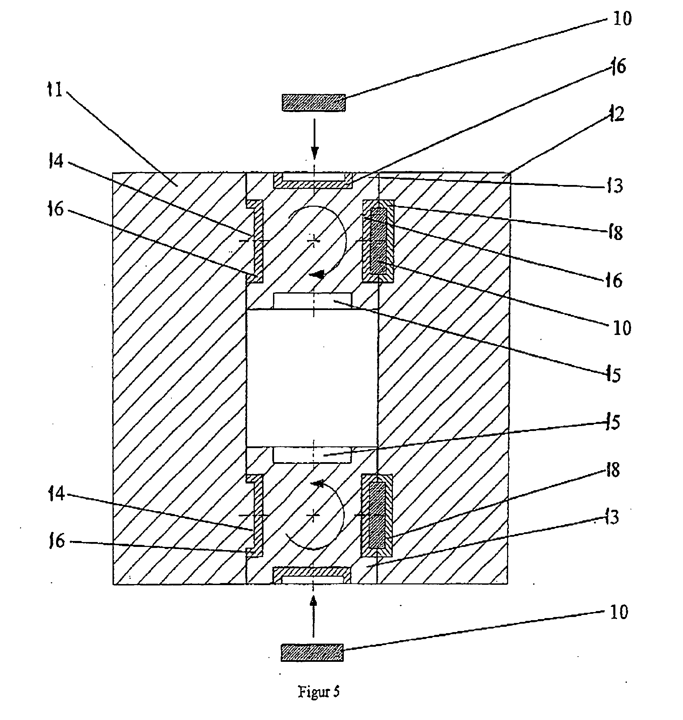

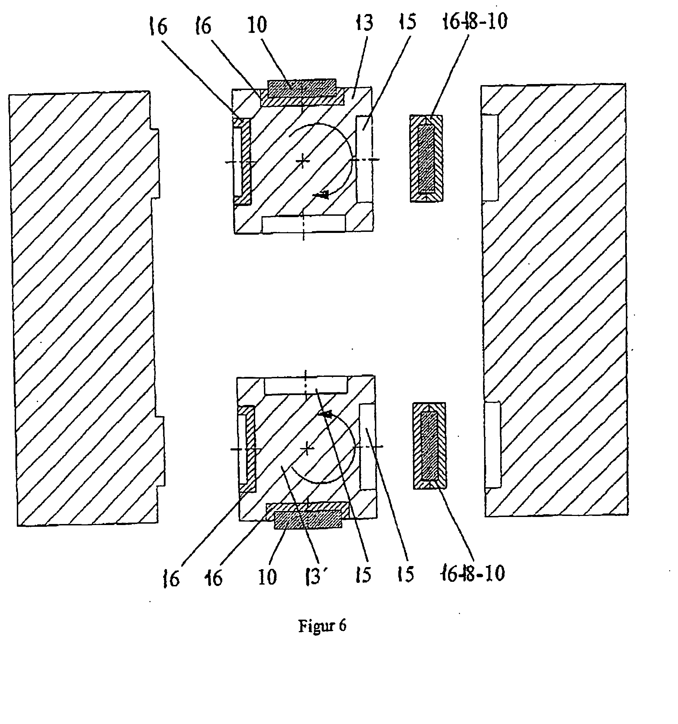

The various uses and advantages of the procedure and machinery according to the invention are specified under the description of the drawing. It should be noted that Fig. 5 and 6 do not disclose a tool for carrying out the present invention and consequently primarily serve to elucidate the principles of tools having at least one turnable middle section arranged between two additional mould parts. On the drawing
Fig. 1 shows a tool according to the invention in its first cycle of four phases seen from above in closed position,
Fig. 2 shows the same in a following cycle also seen from above in closed position,
Fig. 3 shows the same in open position, where the turning of 90° in the direction of the arrows can take place,
Fig. 4 shows the same, where the jaws also are opened, so that the finished combined parts are released,
Fig. 5 shows one for the inserting intended tool not being according to the invention with two turnable middle sections seen from above in closed position, and
Fig. 6 the same in open position.

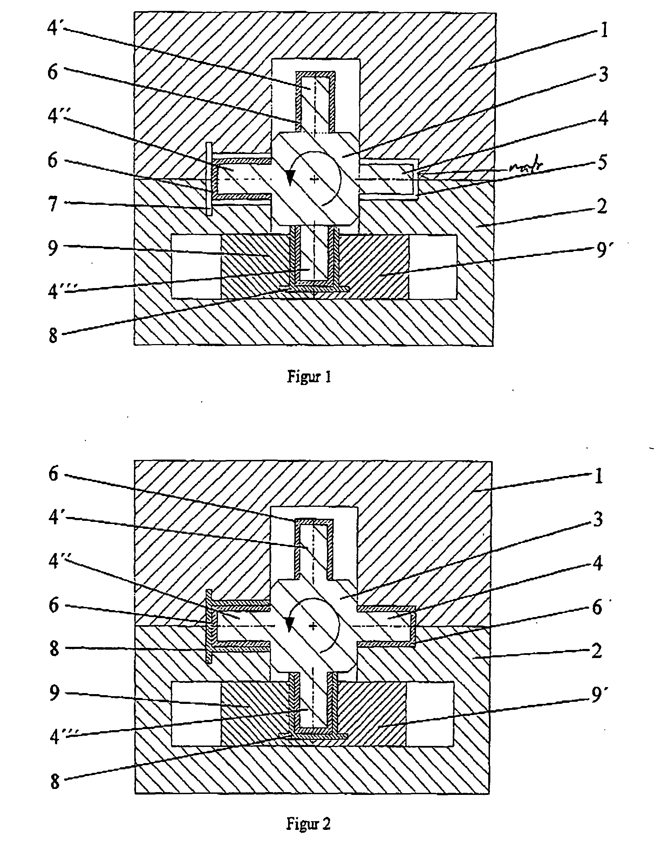

Fig. 1 shows a tool according to the invention for the two-component moulding with the stationary mould part 1, the movable mould part 2 and the turnable middle section 3. On the turnable middle section 3 there is on each of the four sides placed a core, which positions in the four phases of the moulding respectively are marked as 4, 4', 4" and 4"'. In the beginning of the first phase, a core is placed in position 4 at the right and situated in the cavity 5 between the stationary mould part 1 and the movable mould part 2. In the second phase, the placing of the core is in the top position 4', where there in the mould cavity is moulded the inner piece 6 of the part. In the third phase, where the core is in a position 4" at the left on the figure, the moulded piece 6 of the part is still placed on it. The moulded and cooled piece 6 of the part now serves as a part of the mould, namely as the inner parting line of the cavity for the next piece 8 of the part in connection with the outer mould cavity 7. In the fourth and the last phase from the start, in which the core is in its lowest position 4"', the final moulding of the next piece 8 of the part is made in the outer mould cavity 7. In the movable mould part 2 are shown the two jaw parts 9 and 9', which at their later opening makes the ejection of the then complete moulded combined part 6-8 possible, but which here are closed and still holding the combined part.

However, as will be seen from the figure, there is plenty of space for placing e. g. hotrunners, preferably in the stationary mould part 1 as in the ordinary moulding tools.

Fig. 2 shows the same tool in closed position in one of the cycles that follows after the first cycle shown on Fig. 1. In the phase to the right on the core there is in the mould cavity moulded the innermost placed piece 6 of the parts. In the top position this piece 6 of the parts is cooled so that it in the phase at the left, where the position of the core is 4", can serve as a part of the mould outline for the final moulding of the next piece 8 of the part. In the phase at the lowest point of the figure with the core in position 4"' is seen the finished moulded combined part 6-8 ready for ejection by the use of the two built-in jaw parts 9 and 9'.

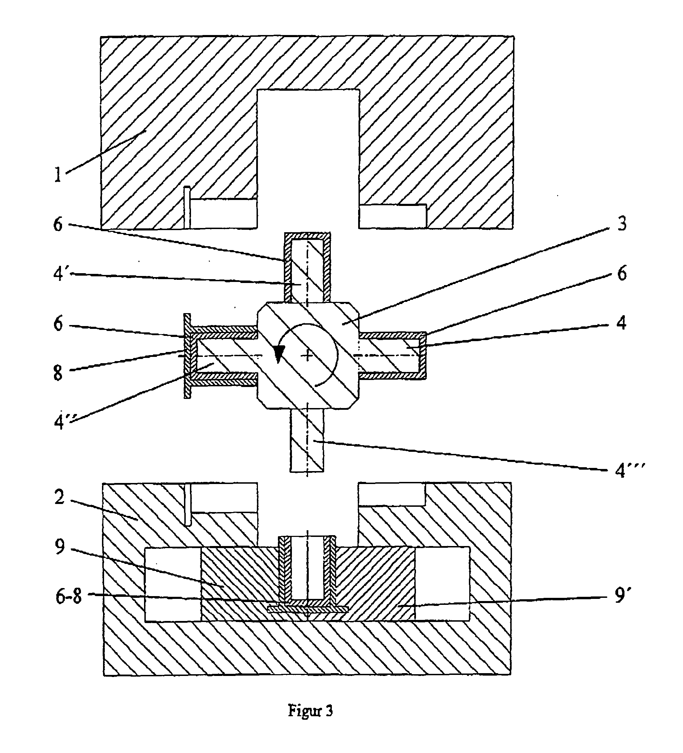

On Fig. 3 is shown the same tool in open position, where the turnable middle section 3 is able to perform its repeated 90 degrees turnings. It concerns the same four phases with the respective placements 4, 4', 4"and 4"' of the cores as in the other figures. It shall be noticed that in the finishing lowest position 4"', the finished moulded combined part 6-8 is removed from its core by the use of the two jaws 9 and 9' which have not yet opened. In this way it is avoided to place any ejectors in the middle section 3 and maybe the use of ejectors in the tool is completely avoided. This design is a significant simplification of the tool construction and the opening distance and the built-in height can in this way be minimized compared to tools with traditional ejectors. However, in other cases more traditional ejectors can be used with the tools according to the invention.

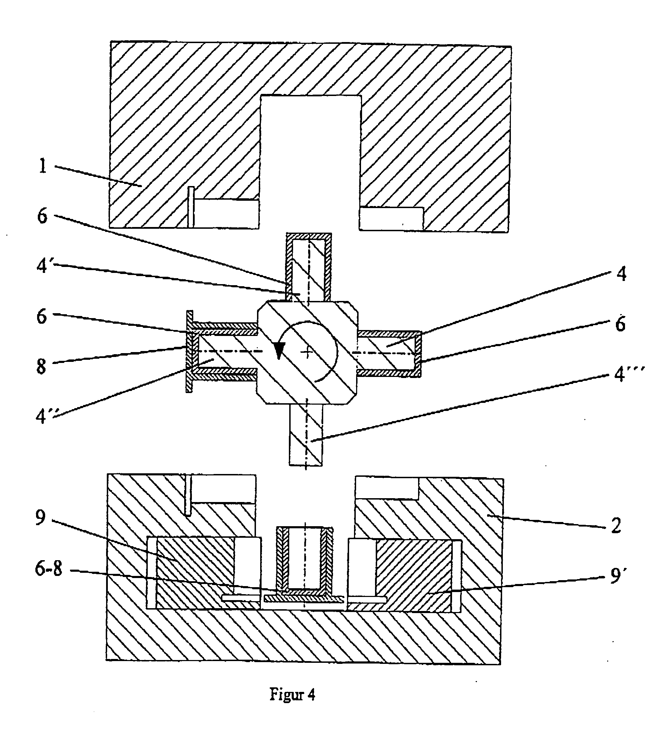

Fig. 4 shows the same tool in open position, which differs from Fig. 3 in that the jaws 9 and 9' are opened, thus enabling the final ejection of the finished combined part 6-8. This can for example be effected by ejectors (not shown) being placed under the jaws 9 and 9' or by using compressed air.

Fig. 5 is a top view of a tool used for carrying out a procedure not in accordance with the present invention. The tool is used for the insertion of e. g. metal parts. In the closed tool, consisting of the stationary mould part 11 and the movable mould part 12, are shown two uniform turnable middle sections 13 and 13', which here rotate in opposite directions in order to improve the balance of the mould. If considering the upper part of the middle section only, the lowest phase shows the empty mould cavity 15 in the middle section 13. In the next phase at the left on the figure, this mould cavity 15 serves in connection with the core 14 from the mould part 11 for the moulding of the first part 16 of the plastic part. In the upper phase, the part to be inserted is added to the piece 16. This can take place while the mould is still dosed, thus saving time. In the last phase at the right, the last piece 18 of the plastic part is moulded on, so that the metal part 10 is now firmly encapsulated in the plastic.

Fig. 6 shows the same tool in open position, where the finished in-moulded part 16-10-18 can be ejected, after which the process can proceed continuously.

Fig. 1 to 4 of the drawing is only an example of how this invention can be transformed into functioning tools. A large number of other designs of the tool according to the invention can be envisaged, but the illustrated example should be sufficient to show the fundamental principles of the invention.

In the two-component edition shown in the drawing, where the inner piece of the part is moulded before the next, it can be achieved that the two pieces of the part after ejection are not so coherent that they are not able to be moved in respect of each other, which is relevant by e.g. a screw cap with its adapted tube neck. An example could also have been shown where the inner mould part is first moulded and then the outermost on top of it, so the two part pieces are more fixed together.

Besides the illustrated two-component tool, one or more examples of multi-component tools could also have been shown. In a special edition, which is also not shown on the drawing, there can be jaws in both the stationary and/or in the movable mould part, which can be closed completely or partly around the turnable middle section. Hereby you can e. g. obtain four mouldable positions, which in this case could be usable for a four-component part. These jaws could also be substituted by or combined with core-pull or the like, which opens up the possibility of moulding very complex multi-component parts that would hardly have been possible to mould in a traditional way.

Finally, an example of a tool for moulding a one-component subject should be mentioned, wherein the turnable middle section can substitute a traditional pair of jaws, as the stationary and the movable mould parts serve as jaws by the opening and closing movement in combination with the turnable middle section. As a result, it is possible to eject the parts in the direction of the movement of the closing unit while moulding the parts.

## Claims

1. Procedure for production of parts (6, 8), preferably of plastic, both one-component as well as multi-component, in a tool equipped with a stationary mould part (1), a movable mould part (2) and at least one turnable middle section, turnable about an axis perpendicular to the closing direction of the tool, said middle section (3) having a cross-section with an outline of a regular polygon with pairs of opposite placed mutually parallel surfaces, the tool having an open position and a closed position, in which latter position one of the pairs of mutually parallel surfaces of the turnable middle section is placed at a right angle to the closing direction of the tool and another pair of mutually parallel surfaces of the turnable middle section is not placed at a right angle to the closing direction of the tool **characterized in that** the turnable middle section (3) is supplied with material on at least one of the surfaces of the turnable middle section (3), which is not placed at a right angle of the closing direction of the tool, by moulding a part or a piece of a part (6 and 8) on at least one of these surfaces of the turnable middle section.

2. Procedure as mentioned in claim 1, **characterized in that** this moulding takes place while the tool is in its closed position.

3. Procedure as mentioned in at least one of the previous claims, **characterized in that** the supply of material takes place on at least two non-mutually parallel surfaces of the turnable middle-section (3).

4. Procedure as mentioned in at least one of the previous claims, **characterized in that** the supply of material takes place on two mutually parallel surfaces of the turnable middle section (3).

5. Procedure according to at least one of the previous claims **characterized in that** the sides of the turnable middle section (3), which are parallel to the closing direction, are provided with a core part and the corresponding areas in the stationary mould part (1) and in the movable mould part (2) provide two jaw parts.

6. Procedure according to at least one of the previous claims, **characterized in that** the stationary mould part (1) and/or the movable mould part (2) of the tool is/are equipped with jaws/core pull (9, 9') closing around the surfaces of the turnable middle section (3), which is/are not at a right angle to the closing direction of the tool.

7. Procedure according to at least one of the previous claims, **characterized in that** the corners of the polygonal cross-section outline of the turnable middle section are cut off to minimize the opening movement of the tool.

## Patentansprüche

1. Verfahren für die Herstellung von Teilen (6, 8), vorzugsweise aus Kunststoff, sowohl als Einkomponenten-Teil als auch als Mehrkomponenten-Teil, in einer Vorrichtung, ausgestattet mit einem stationären Werkzeugteil (1), einem bewegbaren Werkzeugteil (2) und zumindest einem drehbaren Mittelteil, drehbar um eine Achse senkrecht zur Schließrichtung der Vorrichtung, wobei der Mittelteil (3) einen Querschnitt mit einem Umriss eines regelmäßigen Vielecks mit Paaren von einander gegenüberliegend angeordneten gegenseitig parallelen Oberflächen aufweist, die Vorrichtung eine offene Position und eine geschlossene Position aufweist, wobei in der letzteren Position eines der Paare der gegenseitig parallelen Oberflächen des drehbaren Mittelteils in einem rechten Winkel zur Schließrichtung der Vorrichtung angeordnet ist und ein anderes Paar der gegenseitig parallelen Oberflächen des drehbaren Mittelteils nicht in einem rechten Winkel zur Schließrichtung der Vorrichtung angeordnet ist, **dadurch gekennzeichnet, dass** dem drehbaren Mittelteil (3) Material auf zumindest einer der Oberflächen des drehbaren Mittelteils (3) zugeführt wird, die nicht in einem rechten Winkel der Schließrichtung der Vorrichtung angeordnet ist, durch das Formen eines Teils oder eines Stücks eines Teils (6 und 8) auf zumindest einer dieser Oberflächen des drehbaren Mittelteils.

2. Verfahren, wie in Anspruch 1 erwähnt, **dadurch gekennzeichnet, dass** dieses Formen stattfindet, während die Vorrichtung sich in ihrer geschlossenen Position befindet.

3. Verfahren, wie in zumindest einem der vorangehenden Ansprüche erwähnt, **dadurch gekennzeichnet, dass** die Zuführung von Material auf zumindest zwei nicht gegenseitig parallelen Oberflächen des drehbaren Mittelteils (3) stattfindet.

4. Verfahren, wie in zumindest einem der vorangehenden Ansprüche erwähnt, **dadurch gekennzeichnet, dass** die Zuführung von Material auf zwei gegenseitig parallelen Oberflächen des drehbaren Mittelteils (3) stattfindet.

5. Verfahren nach zumindest einem der vorangehenden Ansprüche, **dadurch gekennzeichnet, dass** die Seiten des drehbaren Mittelteils (3), die parallel zur Schließrichtung sind, einen Kernteil aufweisen und dass die entsprechenden Bereiche im stationären Werkzeugteil (1) und im bewegbaren Werkzeugteil (2) zwei Backenteile aufweisen.

6. Verfahren nach zumindest einem der vorangehenden Ansprüche, **dadurch gekennzeichnet, dass** das stationäre Werkzeugteil (1) und/oder das bewegbare Werkzeugteil (2) der Vorrichtung mit Backen/Kernzug (9, 9') ausgestattet ist/sind, die sich um die Oberflächen des drehbaren Mittelteils (3) schließen, die nicht im rechten Winkel zur Schließrichtung der Vorrichtung ist/sind.

7. Verfahren nach zumindest einem der vorangehenden Ansprüche, **dadurch gekennzeichnet, dass** die Ecken des Vieleckquerschnitt-Umrisses des drehbaren Mittelteils weggeschnitten sind, um die Öffnungsbewegung der Vorrichtung zu minimieren.

## Revendications

1. Procédure de production de pièces (6, 8), de préférence en plastique, à la fois à un composant et à composants multiples, dans un outil équipé d'une partie de moule stationnaire (1), une partie de moule mobile (2) et au moins une section médiane rotative, rotative autour d'un axe perpendiculaire à la direction de fermeture de l'outil, ladite section médiane (3) ayant une section en coupe avec une configuration de polygone régulier avec des paires de surfaces mutuellement parallèles opposées, l'outil ayant une position ouverte et une position fermée, dernière position dans laquelle l'une des paires de surfaces mutuellement parallèles de la section médiane rotative est placée à angle droit par rapport à la direction de fermeture de l'outil et une autre paire de surfaces mutuellement parallèles de la section médiane rotative n'est pas placée à angle droit par rapport à la direction de fermeture de l'outil **caractérisée en ce que** la section médiane rotative (3) est alimentée en matériau sur au moins l'une des surfaces de la section médiane rotative (3), qui n'est pas placée à angle droit dans la direction de fermeture de l'outil, par moulage d'une pièce ou d'une partie d'une pièce (6 et 8) sur au moins l'une de ces surfaces de la section médiane rotative.

2. Procédure selon la revendication 1, **caractérisée en ce que** ce moulage a lieu tandis que l'outil est dans sa position fermée.

3. Procédure selon au moins l'une des revendications précédentes, **caractérisée en ce que** l'alimentation en matériau a lieu sur au moins deux surfaces non mutuellement parallèles de la section médiane rotative (3).

4. Procédure selon au moins l'une des revendications précédentes, **caractérisée en ce que** l'alimentation en matériau a lieu sur deux surfaces mutuellement parallèles de la section médiane rotative (3).

5. Procédure selon au moins l'une des revendications précédentes, **caractérisée en ce que** les côtés de la section médiane rotative (3), qui sont parallèles à la direction de fermeture, sont pourvus d'une partie de noyau et les zones correspondantes dans la partie de moule stationnaire (1) et dans la partie de moule mobile (2) fournissent deux parties de mâchoire.

6. Procédure selon au moins l'une des revendications précédentes, **caractérisée en ce que** la partie de moule stationnaire (1) et/ou la partie de moule mobile (2) de l'outil est/sont équipée(s) de mâchoires/tire-noyau (9, 9') se fermant autour des surfaces de la section médiane rotative (3), qui n'est/ne sont pas à angle droit par rapport à la direction de fermeture de l'outil.

7. Procédure selon au moins l'une des revendications précédentes, **caractérisée en ce que** les coins de la configuration en coupe polygonale de la section médiane rotative sont coupés pour minimiser le mouvement d'ouverture de l'outil.
